# DEMANDE DE BREVET EUROPEEN

(11) **EP 4 782 671 A1**
(43) Date de publication de la demande: **29.07.2026**
(21) Numéro de dépôt: 26152862.4
(22) Date de dépôt: 20.01.2026
(51) Int. Cl.: F02C 3/22, F02C 7/224, F02C 7/25

(54) **SYSTÈME DE PROPULSION POUR AÉRONEF**

(30) Priorité: 23.01.2025 FR 2500712
(71) Demandeur: Airbus Operations (S.A.S.), 31060 Toulouse Cedex 9 (FR)
(72) Inventeur: LARMET, Pierre, 31700 BLAGNAC (FR)
(74) Mandataire: Cabinet Le Guen Maillet

(57) **Abrégé**

L'invention concerne un système (2) de propulsion pour aéronef (1) comportant :
- une chambre de combustion (21),
- un dispositif d'injection (22) de dihydrogène dans ladite chambre de combustion (21),
- une turbine (23),
- une tuyère d'échappement (24), disposée à l'arrière de ladite turbine (23), dans laquelle circule un flux (Fx) de gaz d'échappement chaud issue de la combustion dudit carburant dans ladite chambre de combustion (21) à évacuer,
- un échangeur thermique (25) disposé dans ladite tuyère d'échappement et configuré pour réchauffer le dihydrogène avant qu'il n'alimente la chambre de combustion,
- un module de protection (26), disposé entre ladite turbine (23) et ledit échangeur thermique (25), lequel contient un fluide ayant une capacité à inerter du dihydrogène.
La mise en œuvre d'un tel module de protection fournit une protection de l'échangeur thermique contre les objets étrangers qui pourraient causer des dommages sur l'échangeur thermique.

## Description

### DOMAINE TECHNIQUE

La présente invention concerne un système de propulsion comportant un moteur à combustion alimenté en dihydrogène. L'invention concerne également un aéronef comportant un tel système de propulsion.

### ÉTAT DE LA TECHNIQUE ANTÉRIEURE

Afin de réduire la pollution engendrée par l'utilisation de kérosène lors de l'utilisation d'un aéronef, il se développe des aéronefs dont les moteurs sont alimentés en dihydrogène. Plus particulièrement, le dihydrogène est utilisé pour alimenter une chambre de combustion dans laquelle le dihydrogène est brulé de sorte à générer une énergie motrice et faire tourner le moteur à combustion interne de l'aéronef pour générer la poussée de l'aéronef. Généralement, du dihydrogène liquide est stocké dans un réservoir cryogénique avant d'être transporté puis injecté dans son état gazeux dans la chambre de combustion du moteur.

Pour ce faire, il est connu d'utiliser l'air chaud provenant de la combustion du moteur pour réchauffer le dihydrogène grâce à un échangeur thermique disposé dans le flux d'air chaud d'échappement du moteur.

Cette technique, bien que fonctionnelle, présente l'inconvénient d'exposer cet échangeur thermique à d'éventuels objets étrangers tels que des débris issus de la turbine en cas de dégradation de cette dernière. Or, des débris impactant cet échangeur thermique peuvent provoquer des déformations voire même des dégradations de l'échangeur thermique allant jusqu'à entraîner des fuites de dihydrogène dans le flux d'air chaud d'échappement du moteur. De telles fuites peuvent générer, en tuyère d'échappement du moteur, des mélanges de dihydrogène et d'oxygène propices à créer des conditions inflammables, ce qui n'est évidemment pas satisfaisant. En effet, le mélange d'oxygène et de dihydrogène ne nécessite qu'une très faible énergie minimale d'inflammation dans une plage de concentration de dihydrogène étendue (généralement de l'ordre de 4 à 74% de concentration dans l'air). L'allumage immédiat ou décalé d'une telle fuite de dihydrogène peut entraîner une flamme ou une explosion susceptible d'entraîner des dommages importants, que ce soit sur le système de propulsion ou bien même sur l'aéronef.

Pour des questions de sécurité, et notamment en cas de fuite de dihydrogène dans le flux d'air chaud d'échappement du moteur, il peut être nécessaire de prévoir un arrangement spécifique visant à éviter la création d'un mélange inflammable.

Les documents US 2023/258131 A1 et FR 3 137 719 A1 décrivent chacun un système de propulsion pour aéronef selon l'art antérieur.

### EXPOSÉ DE L'INVENTION

Un objet de la présente invention est de proposer un système de propulsion à dihydrogène dont la sécurité est améliorée.

À cet effet, est proposé un système de propulsion pour aéronef selon la revendication 1.

La mise en œuvre d'un tel module de protection permet de fournir une protection de l'échangeur thermique contre les objets étrangers (tels que des débris issus de la turbine en cas de dégradation de cette dernière) qui pourraient causer des dommages sur l'échangeur thermique. En effet, le module de protection constitue une barrière physique qui permet de stopper les objets étrangers avant qu'ils n'atteignent l'échangeur thermique et n'endommagent ce dernier. De plus, le module de protection constitue aussi une barrière chimique qui permet, dans les cas où les objets étrangers parviendraient à rompre ledit module de protection et atteindraient l'échangeur thermique, causant des dommages sur ce dernier, d'inerter le dihydrogène qui pourrait fuir de l'échangeur thermique de sorte à éviter de créer des conditions inflammables, et ainsi minimiser les risques ou conséquences d'inflammation du dihydrogène le temps que la fuite soit détectée et l'arrivée de carburant coupée.

Avantageusement, ledit fluide sous pression ayant une capacité à inerter du dihydrogène est du diazote.

Selon un aspect particulier, ledit module de protection comporte un circuit fermé contenant ledit fluide sous pression ayant une capacité à inerter du dihydrogène.

Selon un autre aspect particulier, ledit circuit fermé comporte un vase d'expansion configuré pour permettre la dilatation et la contraction dudit fluide lors des variations de température des gaz d'échappement afin de maintenir une pression constante au sein dudit circuit fermé. Selon un aspect particulier, ledit échangeur thermique est un échangeur thermique à plaques à ailettes.

Selon un aspect particulier, ledit échangeur thermique est un échangeur thermique à tubes. L'invention concerne également un aéronef comportant au moins un système de propulsion tel que décrit précédemment.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation et de ces variantes, ladite description étant faite en relation avec les dessins joints, parmi lesquels :
La figure 1 est une vue de dessus d'un aéronef selon l'invention ;
La figure 2 est une vue de côté et en coupe d'un premier exemple de réalisation d'un système de propulsion selon un mode de réalisation non revendiqué ; et
La figure 3 est une vue de côté et en coupe d'un deuxième exemple de réalisation d'un système de propulsion selon l'invention.

### EXPOSÉ DÉTAILLÉ D'UN EXEMPLE DE RÉALISATION

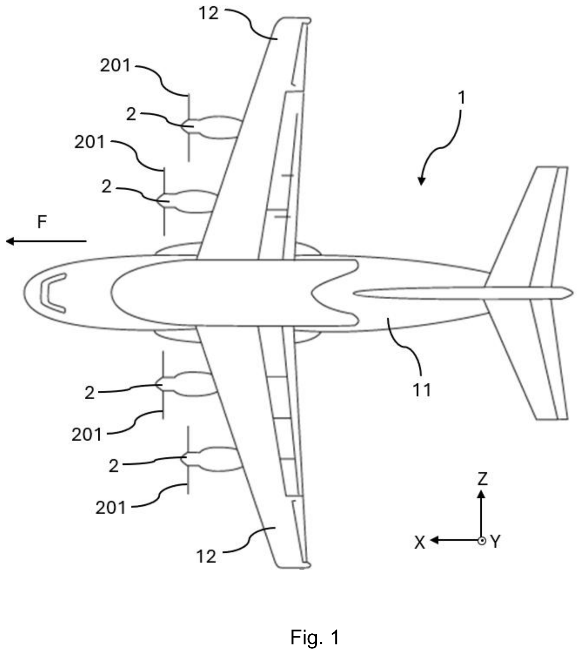

La figure 1 montre un aéronef 1 qui présente un fuselage 11 de part et d'autre duquel est fixée une aile 12. Sous chaque aile 12 est fixé au moins un système de propulsion 2 selon l'invention. Par convention, on appelle X la direction longitudinale de l'aéronef 1, Y la direction transversale de l'aéronef 1 qui est horizontale lorsque l'aéronef 1 est au sol, et Z la direction verticale ou hauteur verticale lorsque l'aéronef 1 est au sol, ces trois directions X, Y et Z étant orthogonales entre elles.

D'autre part, les termes " avant " et " arrière " sont à considérer par rapport à une direction d'avancement de l'aéronef 1 lors du fonctionnement des systèmes de propulsion 2, cette direction étant représentée schématiquement par la flèche F.

Dans le mode de réalisation de l'invention présenté ici, le système de propulsion 2 prend la forme d'un moteur à combustion interne comportant une hélice 201 montée sur l'arbre moteur du moteur à combustion interne qui utilise du dihydrogène comme carburant. Le système de propulsion comporte également un compresseur 202 qui est situé à l'arrière (c'est-à-dire en aval) de l'hélice 201.

On comprend bien évidemment que le système 2 de propulsion de l'invention pourrait être mis en œuvre avec un turboréacteur.

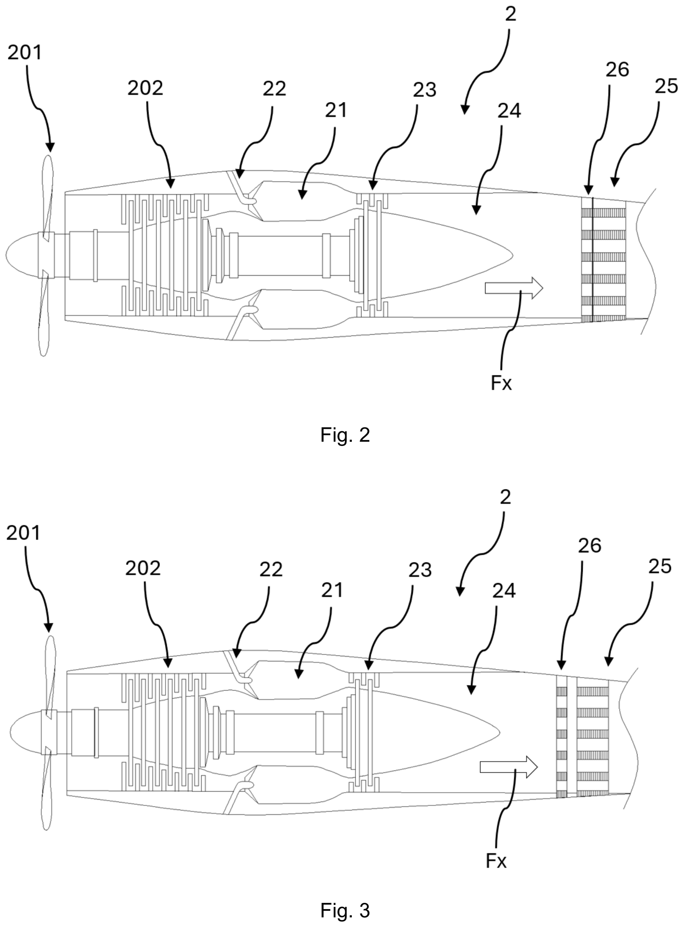

Le système 2 de propulsion, illustré sur les figures 2 et 3, comporte en outre une chambre de combustion 21 ainsi qu'un dispositif d'injection 22 de carburant configuré pour injecter du carburant dans la chambre de combustion 21. En particulier, le carburant utilisé est du dihydrogène qui est injecté dans la chambre de combustion sous forme gazeuse.

Le système 2 de propulsion comporte également une turbine 23, disposée à l'arrière (c'est-à-dire en aval) de la chambre de combustion 21, configurée pour être entraînée en rotation par l'énergie motrice produite dans la chambre de combustion 21 lors de la combustion du dihydrogène. La turbine 23 est suivie d'une tuyère d'échappement 24 (qui est donc disposée à l'arrière de la turbine 23) dans laquelle circule un flux Fx de gaz d'échappement chaud issue de la combustion du dihydrogène dans la chambre de combustion 21. Ce flux Fx de gaz d'échappement chaud est destiné à être évacué du système 2 de propulsion par la tuyère d'échappement 24.

Comme indiqué précédemment, et afin de réchauffer le dihydrogène avant qu'il ne soit injecté dans la chambre de combustion 21, le système 2 de propulsion comporte un échangeur thermique 25 disposé dans la tuyère d'échappement 24, à l'arrière de la turbine 23. Le dihydrogène circule dans l'échangeur thermique 25 avant d'alimenter le dispositif d'injection 22 de sorte à être réchauffé. En effet, l'échangeur thermique 25 étant traversé par le flux Fx de gaz d'échappement chaud issu de la chambre de combustion 21, le dihydrogène qui est généralement stocké dans un réservoir cryogénisé est alors réchauffé par le flux Fx de sorte à être injecté à une température optimale dans la chambre de combustion 21.

Selon l'invention, le système 2 de propulsion comporte en outre un module de protection 26 disposé dans la tuyère d'échappement 24, entre la turbine 23 et l'échangeur thermique 25. Le module de protection 26 contient un fluide sous pression ayant une capacité à inerter du dihydrogène. Le module de protection 26 est configuré pour permettre au flux Fx de gaz d'échappement chaud de traverser le module de protection pour atteindre l'échangeur thermique 26 qui est donc situé à l'arrière du module de protection 26. Selon un exemple de réalisation, le module de protection 26 peut également se présenter sous la forme d'un échangeur thermique dans lequel circule le fluide sous pression ayant une capacité à inerter du dihydrogène et est traversé par le flux Fx de gaz d'échappement chaud.

De cette manière, un tel module de protection 26 fournit une protection de l'échangeur thermique contre les objets étrangers (tels que des débris issus de la turbine en cas de dégradation de cette dernière) qui pourraient causer des dommages sur l'échangeur thermique 25. Plus précisément, le module de protection 26 constitue une barrière physique qui peut permettre de stopper les objets étrangers avant qu'ils n'atteignent l'échangeur thermique 25 et n'endommagent ce dernier. De plus, le module de protection 26 constitue aussi une barrière chimique qui permet, dans les cas où les objets étrangers atteindraient l'échangeur thermique 25 et causeraient des dommages sur ce dernier, d'inerter le dihydrogène qui pourrait fuir de l'échangeur thermique 25 en cas d'endommagement de ce dernier de sorte à éviter de créer des conditions inflammables, et ainsi éviter tout risque d'incendie ou d'explosion du dihydrogène. En effet, si des objets étrangers atteignent l'échangeur thermique 25, cela signifie qu'ils ont traversé et donc endommagé le module de protection 26, libérant ainsi le fluide sous pression ayant une capacité à inerter du dihydrogène qui y est contenu dans la tuyère d'échappement 24.

En particulier, le fluide sous pression ayant une capacité à inerter du dihydrogène est libéré au niveau et autour de l'échangeur thermique 25 à partir duquel une fuite de dihydrogène est susceptible de se produire.

Un telle mise en œuvre permet donc, le temps de détecter une fuite de dihydrogène ou une défaillance du moteur, de couper l'alimentation en carburant de ce dernier et d'éviter tout risque d'incendie ou d'explosion du dihydrogène.

En particulier, le fluide sous pression ayant une capacité à inerter du dihydrogène utilisé dans le système 2 de propulsion de l'invention est du diazote.

De préférence, le module de protection 26 comporte un circuit fermé contenant le fluide sous pression ayant une capacité à inerter du dihydrogène. De préférence, le fluide sous pression peut circuler dans le circuit fermé de sorte que le module de protection 26 puisse fonctionner comme l'échangeur thermique 25, ce qui facilite notamment son intégration dans la tuyère d'échappement 24.

De préférence encore, lorsqu'un circuit fermé est utilisé dans le module de protection 26, ce dernier comporte un vase d'expansion qui est connecté au circuit fermé et qui permet la dilatation et la contraction du fluide lors des variations de température des gaz d'échappement afin de maintenir une pression constante au sein du circuit fermé. En d'autres termes, le vase d'expansion permet de réguler la pression au sein du circuit fermé, c'est-à-dire de lisser les variations de pression au sein du circuit fermé dues aux variations de températures résultant de l'exposition du module de protection 26 au flux Fx de gaz d'échappement chaud dans la tuyère d'échappement 24. Les risques de suppression et de dégradation du module de protection 26 sont donc minimisés.

L'échangeur thermique 25 mis en œuvre dans le système 2 de propulsion de l'invention peut indifféremment se présenter sous la forme d'un échangeur à plaques à ailettes ou d'un échangeur thermique à tubes. De façon particulière, les tubes de l'échangeur thermique à tubes peuvent comporter des ailettes.

Selon un premier exemple de réalisation non revendiqué illustré sur la figure 2, le module de protection 26 fait partie intégrante de l'échangeur thermique 25 et est disposé à l'avant de l'échangeur thermique 25. En d'autres termes, le module de protection 26 est intégré à l'échangeur thermique 25 (c'est-à-dire disposé à l'intérieur de l'échangeur thermique 25). Il est en particulier disposé à l'avant de l'échangeur thermique 25 et peut constituer les premières rangées (de plaques ou de tubes selon le type d'échangeur thermique) de l'échangeur thermique 25.

De cette manière, l'intégration et l'installation du module de protection dans la tuyère d'échappement sont facilitées.

Dans un deuxième exemple de réalisation conforme à l'invention, illustré sur la figure 3, le module de protection 26 est disposé à l'avant (c'est-à-dire en amont) et à distance de l'échangeur thermique 25. En d'autres termes, le module de protection 26 et l'échangeur thermique 25 sont indépendants et de préférence séparés l'un de l'autre.

De cette manière, le remplacement du module de protection 26, notamment en cas de dégradation de ce dernier par des objets étrangers, est facilité et ne nécessite pas forcément le remplacement de l'échangeur thermique 25.

## Revendications

1. Système (2) de propulsion pour aéronef (1) comportant :
- une chambre de combustion (21),
- un dispositif d'injection (22) de carburant configuré pour injecter un carburant dans ladite chambre de combustion (21), où ledit carburant est du dihydrogène,
- une turbine (23) configurée pour être entraînée en rotation par l'énergie motrice produite par ladite chambre de combustion (21),
- une tuyère d'échappement (24), disposée à l'arrière de ladite turbine (23), dans laquelle circule un flux (Fx) de gaz d'échappement chaud issue de la combustion dudit carburant dans ladite chambre de combustion (21) à évacuer,
- un échangeur thermique (25) disposé dans ladite tuyère d'échappement (24) et dans lequel circule ledit carburant avant d'alimenter ledit dispositif d'injection (22) et où ledit échangeur thermique (25) est traversé par ledit flux (Fx) de gaz d'échappement,
- un module de protection (26), disposé entre ladite turbine (23) et ledit échangeur thermique (25), le module de protection (26) contenant un fluide sous pression ayant une capacité à inerter du dihydrogène et ledit module de protection (26) étant traversé par ledit flux (Fx) de gaz d'échappement,
**caractérisé en ce que** ledit module de protection (26) est disposé à l'avant et à distance dudit échangeur thermique (25).

2. Système (2) de propulsion selon la revendication 1, **caractérisé en ce que** ledit fluide sous pression ayant une capacité à inerter du dihydrogène est du diazote.

3. Système (2) de propulsion selon la revendication 1 ou 2, **caractérisé en ce que** ledit module de protection (26) comporte un circuit fermé contenant ledit fluide sous pression ayant une capacité à inerter du dihydrogène.

4. Système (2) de propulsion selon la revendication 3, **caractérisé en ce que** ledit circuit fermé comporte un vase d'expansion configuré pour maintenir la pression constante au sein dudit circuit fermé.

5. Système (2) de propulsion selon l'une quelconque des revendications 1 à 4, **caractérisé en ce que** ledit échangeur thermique (25) est un échangeur thermique à plaques à ailettes.

6. Système (2) de propulsion selon l'une quelconque des revendications 1 à 4, **caractérisé en ce que** ledit échangeur thermique (25) est un échangeur thermique à tubes.

7. Aéronef (1) comportant au moins un système (2) de propulsion selon l'une quelconque des revendications 1 à 6.
